# EUROPÄISCHE PATENTSCHRIFT

(11) **EP 3 976 417 B1**
(45) Veröffentlichungstag und Bekanntmachung des Hinweises auf die Patenterteilung: **06.12.2023**
(21) Anmeldenummer: 20731387.5
(22) Anmeldetag: 25.05.2020
(51) Int. Cl.: B60L 7/10, H02M 5/44, H02P 3/22, H02M 1/00, H02P 27/06, H02M 7/797, B60L 50/40, B60L 7/22

(54) **ANTRIEBSSYSTEM UND VERFAHREN ZUM BETREIBEN EINES ANTRIEBSSYSTEMS**
DRIVE SYSTEM AND METHOD FOR OPERATING A DRIVE SYSTEM
SYSTÈME D'ENTRAÎNEMENT ET PROCÉDÉ POUR FAIRE FONCTIONNER UN SYSTÈME D'ENTRAÎNEMENT

(30) Priorität: 29.05.2019 DE 102019003756
(43) Veröffentlichungstag der Anmeldung: 06.04.2022
(73) Patentinhaber: SEW-EURODRIVE GmbH & Co. KG, 76646 Bruchsal (DE)
(72) Erfinder: BUDZEN, Harald, 76829 Landau (DE); SCHUHMACHER, Henrik, 76646 Bruchsal (DE)
(86) Internationale Anmeldenummer: PCT/EP2020/025242
(87) Internationale Veröffentlichungsnummer: WO 2020/239260

(56) Entgegenhaltungen:
- EP-A1- 3 156 358
- CN-U- 201 504 218
- IL-A- 169 908
- JP-A- 2007 151 392
- JP-B2- 4 772 718
- JP-B2- 6 069 151
- KR-A- 20080 079 081
- US-A1- 2003 089 557
- US-A1- 2006 020 350
- US-A1- 2007 137 945
- US-A1- 2017 250 538
- US-B2- 6 870 279
- US-B2- 9 270 192
- Panduit: "Uninterruptible Power Supply (UPS) No Battery @BULLET Maintenance-Free @BULLET Remote Management", , 22. September 2016 (2016-09-22), XP055724302, Gefunden im Internet: URL:http://www.panduit.com/heiler/ProductB ulletins/D-PUCB02--SA-ENG-UPSProductBullet in-W.pdf [gefunden am 2020-08-21]
- MSC ELECTRONICS OY ED - MSC ELECTRONICS OY: "SUPER CAPACITOR MODULE (SCM)", INTERNET CITATION, 8. April 2010 (2010-04-08), Seiten 1-2, XP002656492, Gefunden im Internet: URL:http://www.msc.eu/msc_electronics/uplo aded/files/Super_Capacitor_Module__SCM__Da ta_Sheet.pdf [gefunden am 2011-08-09]

## Beschreibung

Die Erfindung betrifft ein Antriebssystem und ein Verfahren zum Betreiben eines **Antriebssystems.**

Es ist allgemein bekannt, dass ein Antriebssystem einen drehzahlgeregelten Elektromotor aufweist.

**Aus der** US 2017/250538 A1 **ist als nächstliegender Stand der Technik ist ein elektrisches Leistungsversorgungssystem bekannt.**

**Aus der** EP 3 156 358 A1 **ist ein automatisches Aufzugsrettungssystem bekannt.**

**Aus der** JP 6 069151 B2 **ist ein Antriebssystem bekannt.**

**Aus der** CN 201 504 218 U1 **ist ein Zwischenkreis mit Bremschopper bekannt.**

**Aus der XP055724302 Ist eine unterbrechungsfreie Stromversorgung bekannt.**

**Aus der XP002656492 ist ein Superkondensatormodul bekannt.**

Der Erfindung liegt daher die Aufgabe zugrunde, ein Antriebssystem in umweltschonender, insbesondere in energiesparender Weise, weiterzubilden.

Erfindungsgemäß wird die Aufgabe bei dem Antriebssystem nach den in Anspruch 1 angegebenen Merkmalen gelöst.

Wichtige Merkmale der Erfindung bei dem Antriebssystem sind in dem Anspruch 1 gegeben.

Von Vorteil ist dabei, dass dem gleichspannungsseitigen Anschluss des Wechselrichters ein Speicher parallel zuschaltbar ist über eine Induktivität, wenn die am gleichspannungsseitigen Anschluss des Wechselrichters anliegende Spannung einen ersten Schwellwert überschreitet.

Somit ist im generatorischen Betrieb des Motors ein Umwandeln von überschüssiger Energie in Wärme mittels des Bremswiderstands vermeidbar und im motorischen Betrieb zunächst der Motor aus dem Speicher versorgbar. Erst nach Entleeren des Speichers ist eine Versorgung aus dem Wechselspannungsversorgungsnetz über den Gleichrichter ausführbar.

Bei einer vorteilhaften Ausgestaltung ist dem zweiten steuerbaren Halbleiterschalter (S1) eine Diode (D) parallelgeschaltet,
insbesondere wobei die Diode (D) derart gepolt ist, dass der Speicher über die Diode entladbar ist, wenn die Spannung am Speicher größer ist als die am gleichspannungsseitigen Anschluss des Wechselrichters anliegende Spannung. Von Vorteil ist dabei, dass dem Wechselrichter Energie aus dem Speicher automatisch zuführbar ist, wenn die Spannung am Speicher größer ist als die am gleichspannungsseitigen Anschluss des Wechselrichters anliegende Spannung.

Bei einer vorteilhaften Ausgestaltung ist der Anschluss des Hauptmoduls mittels eines Kabels mit dem gleichspannungsseitigen Anschluss des Wechselrichters verbunden. Von Vorteil ist dabei, dass das Hauptmodul flexibel zum Wechselrichter positionierbar ist.

Bei einer vorteilhaften Ausgestaltung steuert eine Signalelektronik des Hauptmoduls den zweiten steuerbaren Halbleiterschalter derart an, dass dieser geschlossen ist, wenn die am gleichspannungsseitigen Anschluss des Wechselrichters anliegende Spannung einen ersten Schwellwert überschreitet, und ansonsten geöffnet ist. Von Vorteil ist dabei, dass der Bremswiderstand keine Energie zugeführt bekommt, sondern die überschüssige Energie an den ersten Speicher abgeführt wird.

Bei einer vorteilhaften Ausgestaltung ist der Speicher ein Elektrolytkondensator, Von Vorteil ist dabei, dass der Speicher kostengünstig mit einer großen Kapazität ausrüstbar ist.

Alternativ ist der Speicher mit einem oder mehreren Doppelschichtkondensatoren, insbesondere Ultracaps, ausgeführt,
insbesondere wobei aber jedem aus Doppelschichtkondensatoren ausgeführten Speicher ein DC/DC-Wandler vorgeschaltet ist. Von Vorteil ist dabei, dass der Speicher kostengünstig mit einer großen Kapazität ausrüstbar ist und auch bei niedrigen, am Speicher anliegenden Spannungen noch Energie in den Zwischenkreis zuführbar ist.

Bei der Erfindung ist das Hauptmodul mit einer Hutschiene verbunden. Von Vorteil ist dabei, dass das Hauptmodul in einem Schaltschrank geschützt vorsehbar ist und sicher auf der Hutschiene befestigbar ist.

Bei der Erfindung weist das Hauptmodul einen Steckverbinderteil auf, insbesondere so, dass die am Speicher anliegende Spannung am Steckverbinderteil zur Verfügung gestellt ist. Von Vorteil ist dabei, dass die Spannung weiteren Modulen, insbesondere Speichermodulen, zur Verfügung stellbar ist.

Be der Erfindung ist ein weiteres Modul auf der Hutschiene befestigt und weist einen weiteren Speicher, insbesondere zweite Kapazität, und ein Gegensteckverbinderteil auf, welches mit dem Steckverbinderteil in Kontakt bringbar ist, insbesondere zur Bildung einer Steckverbindung. Von Vorteil ist dabei, dass die weiteren Module auf der Hutschiene verschiebbar und somit mittels der Steckverbindung verbindbar oder trennbar sind.

Bei der Erfindung ist der weitere Speicher des weiteren Moduls parallel geschaltet zum Speicher des Hauptmoduls. Von Vorteil ist dabei, dass eine noch größere Kapazität dem Wechselrichter bereitstellbar ist.

Bei der Erfindung ist das weitere Modul mittels einer weiteren elektrischen Steckverbindung mit Modulen steckverbindbar, welche jeweils auf der Hutschiene befestigt sind und welche jeweils einen weiteren Speicher aufwiesen, welche dem Speicher des Hauptmoduls parallelgeschaltet sind. Von Vorteil ist dabei, dass durch Verschieben entlang der Hutschiene die Module miteinander verbindbar oder voneinander trennbar sind.

Wichtige Merkmale bei dem Verfahren zum Betreiben eines Antriebssystems sind in Anspruch 7 gegeben.

Von Vorteil ist dabei, dass mittels Vorgeben eines Sollwerteverlaufs, der einen generatorischen Betrieb des Elektromotors umfasst, solange Speicher mit immer höherer Kapazität zuschaltbar sind, bis der Bremswiderstand nicht mehr mit überschüssiger Energie beaufschlagbar ist.

Bei einer vorteilhaften Ausgestaltung wird der vierte und fünfte Verfahrensschritt sooft mit jeweils weiteren gleichartig aufgebauten Modulen wiederholt, bis bei Vorgeben des Sollwerteverlaufs der erst steuerbare Halbleiterschalter ununterbrochen geöffnet bleibt. Von Vorteil ist dabei, dass eine möglichst kleine Kapazität auffindbar ist, bei welcher aber dem Wärmewiderstand keine überschüssige Energie zugeführt wird.

Bei einer vorteilhaften Ausgestaltung weist das Hauptmodul einen zweiten steuerbaren Halbleiterschalter auf, welcher derart angesteuert wird, dass dem gleichspannungsseitigen Anschluss des Wechselrichters eine aus dem ersten Speicher, einer Induktivität und dem zweiten steuerbaren Halbleiterschalter gebildete Reihenschaltung parallel zugeschaltet wird, wenn die am gleichspannungsseitigen Anschluss anliegende Spannung einen ersten Schwellwert überschreitet. Von Vorteil ist dabei, dass Energie aufnehmbar ist im Speicher, Hierzu weist das Hauptmodul ein Mittel zur Spannungserfassung auf, welches die am gleichspannungsseitigen Anschluss des Wechselrichters anliegende Spannung erfasst.

Bei einer vorteilhaften Ausgestaltung weist das Hauptmodul ein Mittel zur Erfassung der am gleichspannungsseitigen Anschluss anliegenden Spannung auf. Von Vorteil ist dabei, dass keine Datenübertragung zwischen dem Wechselrichter und dem Hauptmodul notwendig ist, sondern dass im Hauptmodul aus dem erfassten Spannungsverlauf detektierbar ist, ob der erste steuerbare Halbleiterschalter während der Durchführung des Soltwerteverlaufs geschlossen wurde oder nicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

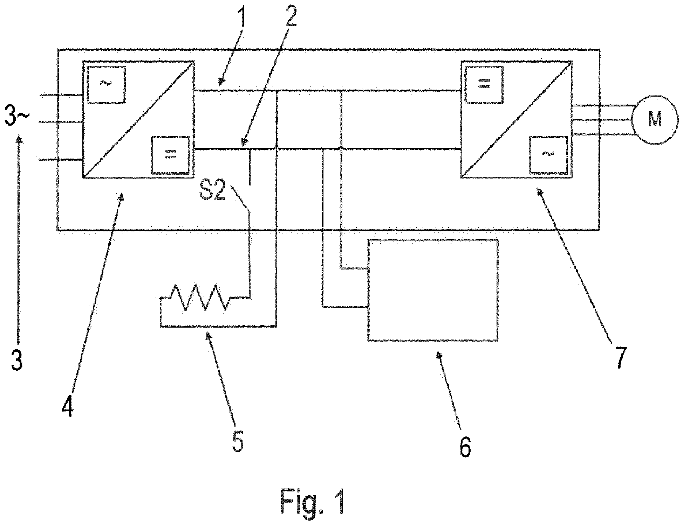

In der Figur 1 ist ein erfindungsgemäßer Antrieb schematisch skizziert, wobei eine Speicheranordnung 6 im Zwischenkreis des Antriebs angeordnet ist.

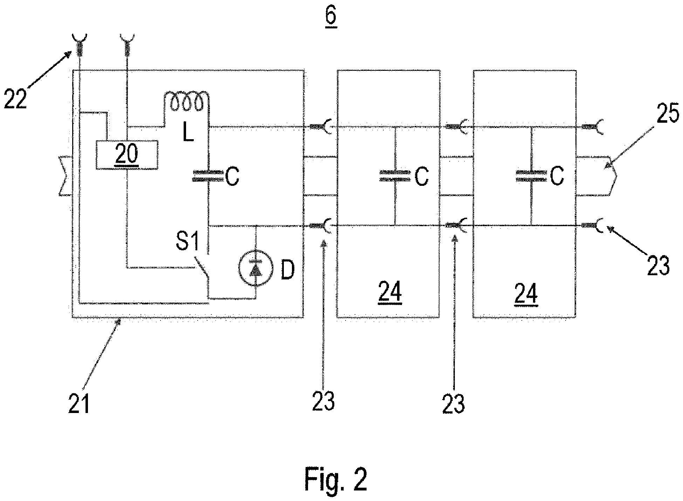

In der Figur 2 ist der modulare Aufbau der auf einer Hutschiene 25 montierbaren Speicheranordnung 6 schematisch skizziert.

Wie in den Figuren gezeigt, weist der Antrieb einen aus einem Drehspannungsversorgungnetz 3 gespeisten Gleichrichter 4 auf, wobei die an seinem gleichspannungsseitigen Anschluss bereit gestellte Spannung als Zwischenkreisspannung bezeichnet wird.

Aus der Zwischenkreisspannung, die ein oberes Zwischenkreispotential 1 und ein unteres Zwischenkreispotential 2 aufweist, wird ein Wechselrichter 7 gespeist, dessen wechselspannungsseitiger Anschluss einen Elektromotor M, insbesondere Drehspannungsmotor, speist.

Parallel zum gleichspannungsseitigen Anschluss des Gleichrichters 4, insbesondere und somit auch zum gleichspannungsseitigen Anschluss des Wechselrichters 7, sind eine Speicheranordnung 6 und eine Reihenschaltung angeschlossen, die somit auch von der Zwischenkreisspannung versorgt werden.

Die Reihenschaltung ist aus einem steuerbaren Halbleiterschalter S2, der als Brems-Chopper bezeichenbar ist, und einem Bremswiderstand 5 gebildet.

Wenn die Zwischenkreisspannung einen oberen Schwellwert überschreitet, wird der steuerbaren Halbleiterschalter S2 geschlossen und somit Energie aus dem Zwischenkreis mittels des Bremswiderstandes 5 in Wärme umgewandelt. Somit wird keine unzulässig hohe Zwischenkreisspannung erreicht.

Die Speicheranordnung 6, insbesondere ein Hauptmodul 21 der Speicheranordnung 6, ist mittels einer elektrischen Leitung, insbesondere flexibles Kabel, mit dem Zwischenkreis verbunden.

Die Speicheranordnung 6 weist Module 24 auf, welche über Steckverbindungen 23 elektrisch verbindbar und mechanisch anbindbar sind.

Jedes der Module 24 und das Hauptmodul 21 sind auf einer, insbesondere derselben, Hutschiene 25 formschlüssig aufgesetzt und mit der Hutschiene 25 verbunden, wobei sie aber in Schienenrichtung der Hutschiene 25 verschiebbar sind.

Somit ist durch Verschieben der Module 24 entlang der Hutschiene 25 die jeweilige Steckverbindung, **zwischen dem Hauptmodul 21 und einem ersten Modul 24,** betätigbar. Ebenso ist auch die jeweilige Steckverbindung zwischen zwei in Schienenrichtung der Hutschiene 25 zueinander nächstbenachbarten Modulen 24 betätigbar durch relatives Verschieben der jeweiligen Module 24 entlang der Hutschiene 25.

Das Hauptmodul 21 weist eine elektronische Schaltung auf, welche eine Reihenschaltung umfasst, die aus der Zwischenkreisspannung versorgt wird und aus einer Drossel L, einer Kapazität C und einem steuerbaren Halbleiterschalter S1 gebildet ist.

Dabei ist die Kapazität C als Anordnung von Elektrolytkondensatoren oder als Anordnung von Doppelschichtkondensatoren mit jeweils vorgeschaltetem DC/DC-Wandler ausgeführt.

Dem steuerbaren Schalter S1 ist eine Freilaufdiode D parallel zugeschaltet. Die Steuersignale zum Ansteuern des steuerbaren Halbleiterschalters S1 werden von einer Signalelektronik 20 erzeugt, welche ebenfalls aus der Zwischenkreisspannung versorgt wird.

Das Hauptmodul 21 ist am Anschluss 22 des Hauptmoduls 21 mittels Kabel mit dem den Zwischenkreis aufweisenden Umrichter des Antriebs verbunden.

Die Signalelektronik 20 des Hauptmoduls 21 weist ein Mittel zur Erfassung der Zwischenkreisspannung des Umrichters auf.

Die Diode D ist derart gepolt und die Ansteuersignale für den steuerbaren Halbleiterschalter S1 sind derart von der Signalelektronik 20 erzeugt, dass der Halbleiterschalter 21 erst dann geschlossen wird, wenn die Zwischenkreisspannung einen ersten schwellwert überschreitet.

Wenn also die Zwischenkreisspannung den ersten Schwellwert überschreitet und größer ist als die an der Kapazität anliegende Spannung, wird die Kapazität C geladen.

ist jedoch die an der Kapazität anliegende Spannung größer als die Zwischenkreisspannung fließt ein Strom von der Kapazität C in den Zwischenkreis.

Wenn der Halbleiterschalter S1 geöffnet ist und die an der Kapazität anliegende Spannung größer als die Zwischenkreisspannung wird die Kapazität C entladen, insbesondere bis die an der Kapazität anliegende Spannung der Zwischenkreisspannung gleicht, insbesondere bei verschwindender Zwischenkreisspannung bis die Kapazität vollständig entladen ist Vorteiligerweise ist nur eine geringe Rückwirkung auf den Umrichter bewirkt.

Um die Kapazität zu vergrößern, sind die Module 24 parallel zur Kapazität zuschaltbar.

Jedes der Module 24 weist zumindest eine weitere Kapazität C auf.

Um die geeignete Anzahl von Modulen für den Antrieb zu bestimmen, wird folgendes Verfahren ausgeführt.

In einem ersten Verfahrensschritt wird der Antrieb ohne die Speicheranordnung betrieben und dabei der Verlauf der Zwischenkreisspannung erfasst. Dabei muss die Betriebsweise des Antriebs derart sein, dass der Brems-Chopper zumindest zu einem ersten Zeitpunkt geschlossen und zu einem zweiten Zeitpunkt geöffnet wird. Als Betriebsweise wird beispielsweise ein Solldrehzahlverlauf zum Antreiben einer Last vorgegeben, der zunächst ansteigt und später abfällt.

In einem darauffolgenden zweiten Verfahrensschritt wird das Hauptmodul 21 mit dem Zwischenkreis verbunden, so dass die Kapazität des Zwischenkreises erhöht ist, und dieselbe Betriebsweise ausgeführt, also beispielsweise derselbe Solldrehzahlverlauf vorgegeben bei derselben Last. Gleichzeitig wird wiederum der Verlauf der Zwischenkreisspannung erfasst und dabei überprüft, ob der Brems-Chopper noch zumindest einmal geschlossen und danach wieder geöffnet wird.

Falls zumindest ein Schließen des Brems-Choppers detektiert wird, wird in einem dritten Schritt ein Modul 24 an das Hauptmodul 21 angeschlossen und in einem dritten Verfahrensschritt wiederum überwacht, ob bei wiederum derselben Betriebsweise der Brems-Chopper nicht geschlossen wird.

Die Erfassung der Zwischenkreisspannung erfolgt entweder im Umrichter, so dass die Auswertung des Verlaufs der Zwischenkreisspannung und Überwachung auf Schließen des Brems-Choppers von der Signalelektronik des Umrichters detektiert wird und eine entsprechende Anzeige oder Warnmeldung an einem Anzeigemittel des Umrichters erfolgt, oder die Erfassung der Zwischenkreisspannung erfolgt, so dass die Auswertung des Verlaufs der Zwischenkreisspannung im Hauptmodul 21 erfolgt, wobei eine entsprechende Anzeige oder Warnmeldung an einem Anzeigemittel des Hauptmoduls 21 erfolgt oder an einem Anzeigemittel eines mit dem Hauptmodul 21 verbundenen Rechners.

In einem jeweils nachfolgenden Verfahrensschritt wird ein weitere Modul 24 an das vorhergehende Modul 24 angeschlossen und wiederum überwacht, ob bei wiederum derselben Betriebsweise der Brems-Chopper nicht geschlossen wird.

Falls der Brems-Chopper nicht geschlossen wird, wird kein weiteres Modul 24 verbunden. Andernfalls wird der letzte Verfahrensschritt derart oft wiederholt, bis der Brems-Chopper nicht mehr geschlossen wird.

Somit ist dann verhindert, dass im Zwischenkreis überschüssige Energie über den Bremswiderstand 5 in Wärme verwandelt wird. Denn diese überschüssige Energie wird in der oder den Kapazitäten C zwischengespeichert. Wenn also der vom Umrichter gespeiste Elektromotor M generatorisch betrieben wird, wird vom Elektromotor Energie in den Zwischenkreis gespeist und bei Überschreiten des ersten Schwellwerts Energie aus dem Zwischenkreis der Speicheranordnung 6 zugeführt. Die auf diese Weise dort zwischengespeicherte Energie wird dann später bei motorischem Betrieb des Elektromotors M aus der Energiespeicheranordnung dem Zwischenkreis und von dort über den Wechselrichter des Umrichters dem Elektromotor M zugeführt.

Das Verbinden des jeweiligen nächsten Moduls 24 erfolgt vorzugsweise automatisiert, insbesondere durch eine einen Linearaktor aufweisende Maschine, insbesondere Roboter. Dabei schiebt die Maschine das jeweils nächste Modul 24 an das vorhergehende Modul 24 oder Hauptmodul 21, so dass die Steckverbindung betätigt wird und somit Energiefluss ermöglicht wird.

Vorzugsweise ist die Hutschiene 25 in einem Schaltschrank angeordnet. Somit sind die Module 24 und das Hauptmodul 21 geschützt anordenbar.

Als Kapazität C wird jeweils ein Elektrolytkondensator verwendet.

Bei weiteren erfindungsgemäßen Ausführungsbeispielen wird als Kapazität C jeweils ein Doppelschichtkondensator, insbesondere Ultracap, verwendet. Somit ist ein dynamisches Stützen des Zwischenkreises ermöglicht.

### Bezugszeichenliste

1 oberes Zwischenkreispotential
2 unteres Zwischenkreispotential
3 Drehspannungsversorgungsnetz
4 Gleichrichter
6 Bremswiderstand
6 Speicheranordnung
7 Wechselrichter
20 Signalelektronik
21 Hauptmodul
22 Anschluss
23 Steckverbindung
24 Modul
25 Hutschiene
M Elektromotor
L Drossel
C Kapazität, insbesondere Elektrolytkondensator oder Doppelschichtkondensator mit vorgeschaltetem DC/DC-Wandier
S1 steuerbarer Halbleiterschalter
S2 steuerbarer Halbleiterschalter

## Patentansprüche

1. Antriebssystem, aufweisend
- einen Wechselrichter (7),
- einen Elektromotor,
- eine erste Reihenschaltung **und**
- ein Hauptmodul (21) mit erstem Speicher, insbesondere erste Kapazität,
wobei der Elektromotor aus dem Speicher versorgbar ist,
wobei der Elektromotor mit dem wechselspannungsseitigen Anschluss (22) des Wechselrichters (7) verbunden ist, insbesondere wobei der Elektromotor aus dem wechselspannungsseitigen Anschluss (22) des Wechselrichters (7) gespeist ist,
wobei die erste Reihenschaltung einen Widerstand, insbesondere Bremswiderstand (5), und einen zum Widerstand elektrisch in Reihe geschalteten, ersten steuerbaren Halbleiterschalter aufweist,
wobei die erste Reihenschaltung parallel geschaltet ist zum gleichspannungsseitigen Anschluss (22) des Wechselrichters (7) und zu einem Anschluss (22) des Hauptmoduls (21),
**wobei** das Hauptmodul (21) eine zweite Reihenschaltung aufweist, welche den Speicher, einen zweiten steuerbaren Halbleiterschalter (S1) und eine Induktivität, insbesondere Drossel (L), aufweist,
insbesondere wobei der Speicher, der zweite steuerbare Halbleiterschalter und die Induktivität in Reihe geschaltet sind,
wobei die zweite Reihenschaltung parallel geschaltet ist zur ersten Reihenschaltung **und** zum gleichspannungsseitigen Anschluss (22) des Wechselrichters (7),
**dadurch gekennzeichnet, dass**
**das Hauptmodul (21) mit einer Hutschiene (25) verbunden ist,**
wobei das Hauptmodul (21) einen Steckverbinderteil aufweist, so, dass die am Speicher anliegende Spannung am Steckverbinderteil zur Verfügung gestellt ist,
wobei ein weiteres Modul (24) auf der Hutschiene (25) befestigt ist und einen weiteren Speicher, insbesondere zweite Kapazität, und ein Gegensteckverbinderteil aufweist, welches mit dem Steckverbinderteil in Kontakt bringbar ist zur Bildung einer Steckverbindung (23),
wobei der weitere Speicher des weiteren Moduls parallel geschaltet ist zum Speicher des Hauptmoduls (21),
wobei das weitere Modul (24) mittels einer weiteren elektrischen Steckverbindung (23) mit Modulen (24) steckverbindbar ist, welche jeweils auf der Hutschiene (25) befestigt sind und welche jeweils einen weiteren Speicher aufwiesen, welche dem Speicher des Hauptmoduls (21) parallelgeschaltet sind,
wobei jedes der Module (24) und das Hauptmodul (21) auf derselben Hutschiene (25) formschlüssig aufgesetzt und mit der Hutschiene (25) verbunden sind und in Schienenrichtung der Hutschiene (25) verschiebbar sind,
wobei durch Verschieben der Module (24) entlang der Hutschiene (25) die jeweiligen Steckverbindungen (23), zwischen dem Hauptmodul (21) und dem weiteren Modul (24), und zwischen zwei in Schienenrichtung der Hutschiene (25) zueinander nächstbenachbarten Modulen (24), betätigbar ist.

2. Antriebssystem nach Anspruch 1,
**dadurch gekennzeichnet, dass**
dem zweiten steuerbaren Halbleiterschalter (S1) eine Diode (D) parallelgeschaltet ist.

3. Antriebssystem nach Anspruch 2,
**dadurch gekennzeichnet, dass**
die Diode (D) derart gepolt ist, dass der Speicher über die Diode entladbar ist, wenn die Spannung am Speicher größer ist als die am gleichspannungsseitigen Anschluss (22) des Wechselrichters (7) anliegende Spannung.

4. Antriebssystem nach einem der vorangegangenen Ansprüche,
**dadurch gekennzeichnet, dass**
der Anschluss (22) des Hauptmoduls (21) mittels eines Kabels mit dem gleichspannungsseitigen Anschluss (22) des Wechselrichters (7) verbunden ist.

5. Antriebssystem nach einem der vorangegangenen Ansprüche,
**dadurch gekennzeichnet, dass**
eine Signalelektronik (20) des Hauptmoduls (21) den zweiten steuerbaren Halbleiterschalter derart ansteuert, dass dieser geschlossen ist, wenn die am gleichspannungsseitigen Anschluss (22) des Wechselrichters (7) anliegende Spannung einen ersten schwellwert überschreitet, und ansonsten geöffnet ist.

6. Antriebssystem nach einem der vorangegangenen Ansprüche,
**dadurch gekennzeichnet, dass**
der Speicher ein Elektrolytkondensator ist
**oder dass**
der Speicher ein Doppelschichtkondensator, insbesondere Ultracap, mit vorgeschaltetem DC/DC-Wandler ist.

7. Verfahren zum Betreiben eines Antriebssystems **nach einem der vorangegangenen Ansprüche,**
wobei der Antrieb einen Wechselrichter (7) aufweist, an dessen wechselspannungsseitigem Anschluss (22) ein Elektromotor elektrisch angeschlossen ist,
wobei **die** Reihenschaltung am geichspannungsseitigen Anschluss (22) des Wechselrichters (7) angeschlossen ist, wobei die Reihenschaltung einen ersten steuerbaren Halbleiterschalter und einen Widerstand, insbesondere Bremswiderstand (5), aufweist,
wobei eine Signalelektronik (20) Ansteuersignale für den Wechselrichter (7), insbesondere steuerbare Halbleiterschalter des Wechselrichters (7), derart erzeugt, dass ein Istwert des Elektromotors, insbesondere ein Istwert der Drehzahl der Rotorwelle des Elektromotors oder ein istwert des vom Elektromotor erzeugten Drehmoments, auf einen Sollwert hin geregelt wird,
**dadurch gekennzeichnet, dass**
in einem ersten Verfahrensschritt ein Sollwerteverlauf vorgegeben wird, bei welchem der erste steuerbare Halbleiterschalter zumindest ein einziges Mal geschlossen wird,
in einem zweiten Verfahrensschritt **das den** ersten Speicher umfassendes Hauptmodul (21) der Reihenschaltung und/ dem geichspannungsseitigen Anschluss (22) des Wechselrichters (7) parallelgeschaltet wird und wiederum der Sollwerteverlauf vorgegeben wird, wobei überwacht wird, ob der erste steuerbare Halbleiterschalter zumindest ein einziges Mal geschlossen wird,
wobei in einem dritten Verfahrensschritt abhängig vom Ergebnis der Überwachung ein weiteres, einen weiteren Speicher aufweisendes Modul (24) mit dem Hauptmodul (21) steckverbunden wird, wobei der weitere Speicher dem ersten Speicher parallel zugeschaltet wird,
wobei in einem vierten Verfahrensschritt wiederum der Sollwerteverlauf vorgegeben wird,
wobei überwacht wird, ob der erste steuerbare Halbleiterschalter zumindest ein einziges Mal geschlossen wird,
wobei in einem fünften Verfahrensschritt abhängig vom Ergebnis der Überwachung ein drittes, einen dritten Speicher aufweisendes Modul (24) mit dem zweiten Modul (24) steckverbunden wird, wobei der dritte Speicher dem ersten Speicher parallel zugeschaltet wird

8. Verfahren nach Anspruch 7,
**dadurch gekennzeichnet, dass**
der vierte und fünfte Verfahrensschritt sooft mit jeweils weiteren gleichartig aufgebauten Modulen (24) wiederholt wird, bis bei Vorgeben des Sollwerteverlaufs der erste steuerbare Halbleiterschalter ununterbrochen geöffnet bleibt.

9. Verfahren nach Anspruch 8 oder 7,
**dadurch gekennzeichnet, dass**
das Hauptmodul (21) einen zweiten steuerbaren Halbleiterschalter aufweist, welcher derart angesteuert wird, dass dem gleichspannungsseitigen Anschluss (22) des Wechselrichters (7) eine aus dem ersten Speicher, einer Induktivität und dem zweiten steuerbaren Halbleiterschalter gebildete Reihenschaltung parallel zugeschaltet wird, wenn die am gleichspannungsseitigen Anschluss (22) anliegende Spannung einen ersten Schwellwert überschreitet.

10. Verfahren nach Anspruch 9, 7 oder 8,
**dadurch gekennzeichnet, dass**
das Hauptmodul (21) ein Mittel zur Erfassung der am gleichspannungsseitigen Anschluss (22) anliegenden Spannung aufweist,

## Claims

1. Drive system comprising
- an inverter (7),
- an electric motor,
- a first series circuit and
- a main module (21) having a first storage device, in particular a first capacitor,
wherein the electric motor can be powered from the storage device,
wherein the electric motor is connected to the AC voltage-side terminal (22) of the inverter (7), in particular wherein the electric motor is fed from the AC voltage-side terminal (22) of the inverter (7),
wherein the first series circuit comprises a resistor, in particular a braking resistor (5), and a first controllable semiconductor switch that is electrically wired in series with the resistor, wherein the first series circuit is wired in parallel with the DC voltage-side terminal (22) of the inverter (7) and with a terminal (22) of the main module (21),
wherein the main module (21) comprises a second series circuit comprising the storage device, a second controllable semiconductor switch (S1) and an inductor, in particular a reactor (L),
in particular wherein the storage device, the second controllable semiconductor switch and the inductor are wired in series,
wherein the second series circuit is wired in parallel with the first series circuit and with the DC voltage-side terminal (22) of the inverter (7),
**characterised in that**
the main module (21) is connected to a DIN rail (25),
wherein the main module (21) comprises a plug-in connector part such that the voltage applied at the storage device is made available at the plug-in connector part,
wherein a further module (24) is secured on the DIN rail (25) and comprises a further storage device, in particular a second capacitor, and a mating plug-in connector part, which can be contacted with the plug-in connector part to form a plug connection (23),
wherein the further storage device of the further module is wired in parallel with the storage device of the main module (21),
wherein the further module (24) can be plug-connected by means of a further electrical plug connection (23) to modules (24) that are each secured on the DIN rail (25) and each comprise a further storage device, which is wired in parallel with the storage device of the main module (21),
wherein each of the modules (24) and the main module (21) are mounted in an interlocking manner on the same DIN rail (25), are connected to the DIN rail (25) and are displaceable in the rail direction of the DIN rail (25),
wherein the respective plug connections (23), between the main module (21) and the further module (24) and between two closest neighbouring modules (24) in the rail direction of the DIN rail (25), can be activated by displacing the modules (24) along the DIN rail (25).

2. Drive system according to claim 1,
**characterised in that**
a diode (D) is wired in parallel with the second controllable semiconductor switch (S1).

3. Drive system according to claim 2,
**characterised in that**
the diode (D) is polarised such that the storage device can be discharged via the diode when the voltage at the storage device is greater than the voltage applied at the DC voltage-side terminal (22) of the inverter (7).

4. Drive system according to any of the preceding claims,
**characterised in that**
the terminal (22) of the main module (21) is connected to the DC voltage-side terminal (22) of the inverter (7) by means of a cable.

5. Drive system according to any of the preceding claims,
**characterised in that**
signal electronics (20) of the main module (21) actuate the second controllable semiconductor switch in such a way that said semiconductor switch is closed when the voltage applied at the DC voltage-side terminal (22) of the inverter (7) exceeds a first threshold, and is open otherwise.

6. Drive system according to any of the preceding claims,
**characterised in that**
the storage device is an electrolytic capacitor
or **in that**
the storage device is an electric double-layer capacitor, in particular an ultracapacitor, having a DC-to-DC converter connected upstream thereof.

7. Method for operating a drive system according to any of the preceding claims,
wherein the drive comprises an inverter (7), to the AC voltage-side terminal (22) of which an electric motor is electrically connected,
wherein the series circuit is connected to the DC voltage-side terminal (22) of the inverter (7), wherein the series circuit comprises a first controllable semiconductor switch and a resistor, in particular a braking resistor (5),
wherein signal electronics (20) generate actuation signals for the inverter (7), in particular controllable semiconductor switches of the inverter (7), in such a way that an actual value of the electric motor, in particular an actual value of the speed of the rotor shaft of the electric motor or an actual value of the torque generated by the electric motor, is controlled towards a setpoint,
**characterised in that**
in a first method step, a setpoint curve in which the first controllable semiconductor switch is closed at least once is specified,
in a second method step, the main module (21), which includes the first storage device, is wired in parallel with the series circuit and with the DC voltage-side terminal (22) of the inverter (7), and the setpoint curve is specified again, wherein it is monitored whether the first controllable semiconductor switch is closed at least once,
wherein, in a third method step, depending on the result of the monitoring, a further module (24) comprising a further storage device is plug-connected to the main module (21),
wherein the further storage device is connected in parallel with the first storage device,
wherein, in a fourth method step, the setpoint curve is specified again,
wherein it is monitored whether the first controllable semiconductor switch is closed at least once,
wherein, in a fifth method step, depending on the result of the monitoring, a third module (24) comprising a third storage device is plug-connected to the second module (24),
wherein the third storage device is connected in parallel with the first storage device.

8. Method according to claim 7,
**characterised in that**
the fourth and fifth method steps are repeated, in each case with further modules (24) of the same construction, as often as needed until the first controllable semiconductor switch remains continuously open when the setpoint curve is specified.

9. Method according to claim 8 or claim 7,
**characterised in that**
the main module (21) comprises a second controllable semiconductor switch, which is actuated such that a series circuit formed out of the first storage device, an inductor and the second controllable semiconductor switch is connected in parallel with the DC voltage-side terminal (22) of the inverter (7) when the voltage applied at the DC voltage-side terminal (22) exceeds a first threshold.

10. Method according to claim 9, claim 7 or claim 8,
**characterised in that**
the main module (21) comprises a means for recording the voltage applied at the DC voltage-side terminal (22).

## Revendications

1. Système d'entraînement, comprenant
- un onduleur (7),
- un moteur électrique,
- un premier montage en série et
- un module principal (21) avec un premier accumulateur, en particulier un premier condensateur,
le moteur électrique pouvant être alimenté à partir du réservoir,
le moteur électrique étant relié au raccord (22), situé du côté tension alternative, de l'onduleur (7), le moteur électrique étant en particulier alimenté à partir du raccord (22), situé du côté tension alternative, de l'onduleur (7),
le premier montage en série présentant une résistance, en particulier une résistance de freinage (5), et un premier commutateur commandable à semi-conducteurs monté électriquement en série par rapport à la résistance,
le premier montage en série étant monté en parallèle par rapport au raccord (22), situé du côté tension continue, de l'onduleur (7) et par rapport à un raccord (22) du module principal (21),
le module principal (21) présentant un second montage en série qui présente l'accumulateur, un second commutateur commandable à semi-conducteurs (S1) et une inductance, en particulier une bobine (L),
l'accumulateur, le second commutateur commandable à semi-conducteurs et l'inductance étant en particulier montés en série,
le second montage en série étant monté en parallèle par rapport au premier montage en série et par rapport au raccord (22), situé du côté tension continue, de l'onduleur (7),
**caractérisé en ce que**
le module principal (21) est relié à un rail DIN (25),
le module principal (21) présentant une partie connecteur enfichable, de sorte que la tension appliquée au niveau de l'accumulateur est fournie à la partie connecteur enfichable,
un module (24) supplémentaire étant fixé sur le rail DIN (25) et présentant un accumulateur supplémentaire, en particulier un deuxième condensateur, et une partie connecteur enfichable homologue pouvant être mise en contact avec la partie connecteur enfichable afin de former une connexion par enfichage (23),
l'accumulateur supplémentaire du module supplémentaire étant monté en parallèle par rapport à l'accumulateur du module principal (21),
le module (24) supplémentaire pouvant être connecté par enfichage, au moyen d'une connexion électrique (23) supplémentaire, à des modules (24) fixés respectivement sur le rail DIN (25) et présentant respectivement un accumulateur supplémentaire, lesdits accumulateurs supplémentaire étant montés en parallèle par rapport à l'accumulateur du module principal (21),
chacun des modules (24) et le module principal (21) étant mis en place par complémentarité de forme sur le même rail DIN (25) et étant reliés au rail DIN (25) et pouvant être déplacés dans la direction d'extension de rail du rail DIN (25),
les connexions par enfichage (23) respectives pouvant être actionnées entre le module principal (21) et le module supplémentaire (24), et entre deux modules (24) immédiatement voisins dans la direction d'extension de rail du rail DIN (25), grâce au déplacement des modules (24) le long du rail DIN (25),

2. Système d'entraînement selon la revendication 1,
**caractérisé en ce que**
une diode (D) est montée en parallèle par rapport au second commutateur commandable à semi-conducteurs (51).

3. Système d'entraînement selon la revendication 2,
**caractérisé en ce que**
la diode (D) est polarisée de telle manière que l'accumulateur peut être déchargé par l'intermédiaire de la diode si la tension au niveau de l'accumulateur est supérieure à la tension appliquée au niveau du raccord (22), situé du côté tension continue, de l'onduleur (7).

4. Système d'entraînement selon l'une quelconque des revendications précédentes,
**caractérisé en ce que**
le raccord (22) du module principal (21) est relié au raccord (22), situé du côté tension continue, de l'onduleur (7) au moyen d'un câble.

5. Système d'entraînement selon l'une quelconque des revendications précédentes,
**caractérisé en ce que**
une électronique de signal (20) du module principal (21) commande le second commutateur commandable à semi-conducteurs de telle manière que celui-ci est fermé si la tension appliquée au niveau du raccord (22), situé du côté tension continue, de l'onduleur (7) dépasse une première valeur seuil, et est sinon ouvert.

6. Système d'entraînement selon l'une quelconque des revendications précédentes,
**caractérisé en ce que**
l'accumulateur est un condensateur électrolytique
ou **en ce que**
l'accumulateur est un condensateur double couche, en particulier un supercondensateur, avec un convertisseur DC/DC placé en amont.

7. Procédé de fonctionnement d'un système d'entraînement selon l'une quelconque des revendications précédentes,
l'entraînement comprenant un onduleur (7), et un moteur électrique (22) étant raccordé électriquement au niveau du raccord (22), situé du côté tension alternative, dudit onduleur,
le montage en série étant raccordé au raccord (22), situé du côté tension continue, de l'onduleur (7), le montage en série présentant un premier commutateur commandable à semi-conducteurs et une résistance, en particulier une résistance de freinage (5), une électronique de signal (20) produisant des signaux de commande destinés à l'onduleur (7), en particulier à des commutateurs commandables à semi-conducteurs de l'onduleur (7), de telle manière qu'une valeur réelle du moteur électrique, en particulier une valeur réelle de la vitesse de rotation de l'arbre de rotor du moteur électrique ou une valeur réelle du couple généré par le moteur électrique, est réglée à une valeur de consigne,
**caractérisé en ce que**
dans une première étape de procédé, une courbe des valeurs de consigne est spécifiée, pour laquelle le premier commutateur commandable à semi-conducteurs est fermé au moins une fois,
dans une deuxième étape de procédé, le module principal (21) comprenant le premier accumulateur est monté en parallèle par rapport au montage en série et au raccord (22), situé du côté tension continue, de l'onduleur (7) et la courbe des valeurs de consigne est à nouveau spécifiée, en vérifiant que le premier commutateur commandable à semi-conducteurs est fermé au moins une fois,
dans une troisième étape de procédé, un module (24) supplémentaire présentant un accumulateur supplémentaire est connecté par enfichage au module principal (21) en fonction du résultat de la vérification,
l'accumulateur supplémentaire étant monté en parallèle par rapport au premier accumulateur,
dans une quatrième étape de procédé, la courbe des valeurs de consigne est à nouveau spécifiée, en vérifiant que le premier commutateur commandable à semi-conducteurs est fermé au moins une fois,
dans une cinquième étape de procédé, un troisième module (24) présentant un troisième accumulateur est connecté par enfichage au deuxième module (24) en fonction du résultat de la vérification,
le troisième accumulateur étant monté en parallèle par rapport au premier accumulateur.

8. Procédé selon la revendication 7,
**caractérisé en ce que**
les quatrième et cinquième étapes de procédé sont répétées avec des modules (24) respectivement supplémentaires construits de la même manière, jusqu'à ce que le premier commutateur commandable à semi-conducteurs reste ouvert en permanence avec la spécification fournie par la courbe des valeurs de consigne.

9. Procédé selon la revendication 8 ou 7,
**caractérisé en ce que**
le module principal (21) présente un second commutateur commandable à semi-conducteurs, qui est commandé de telle manière qu'un montage en série constitué du premier accumulateur, d'une inductance et du second commutateur commandable à semi-conducteurs est monté en parallèle par rapport au raccord (22), situé du côté tension continue, de l'onduleur (7) si la tension appliquée au niveau du raccord (22) situé du côté tension continue dépasse une première valeur de seuil.

10. Procédé selon la revendication 9, 7 ou 8,
**caractérisé en ce que**
le module principal (21) présente un moyen de détection de la tension appliquée au niveau du raccord (22) situé du côté tension continue.
